# EUROPEAN PATENT APPLICATION

(11) **EP 4 712 335 A1**
(43) Date of publication of application: **18.03.2026**
(21) Application number: 24200300.2
(22) Date of filing: 13.09.2024
(51) Int. Cl.: H02P 6/182, H02P 6/21

(54) **DEVICE AND METHOD FOR CONTROLLING A BLDC MOTOR**

(71) Applicant: Melexis Technologies NV, 3980 Tessenderlo-Ham (BE)
(72) Inventor: Moons, Marnix, 3980 Tessenderlo (BE)
(74) Representative: Winger

(57) **Abstract**

This invention provides a method and device for controlling brushless direct current (BLDC) motors, enabling smooth transitions between open loop control at low speeds and closed loop control at higher speeds. The device integrates modules for driving, observing, and transitioning between open and closed loop IB (current and back electromotive force) angles. A weighted average of the IB angles ensures stable motor performance during transitions, minimizing torque shocks, current spikes, and noise. The device also features current and voltage regulation to maintain accurate motor speed under varying conditions. Dynamic adjustment of weighting factors based on motor speed and signal-to-noise ratio further enhances control stability. This system improves motor efficiency in motor driving, reduces the risk of stalling, and optimizes performance across a wide range of operating speeds.

## Description

### Field of the invention

The invention relates to the field of brushless direct current (BLDC) motors. More specifically it relates to a driver and method for controlling such BLDC motors.

### Background of the invention

For many BLDC motors, operating them sensorlessly in closed loop control, such as Field Oriented Control (FOC), at low speeds remains a significant challenge. As a result, it is common practice to use open loop control, with or without current regulation, at these low speeds. Open loop control, while slightly less efficient, offers a more sinusoidal current waveform, leading to better acoustic performance and a reduced risk of motor stalling.

However, as motor speed increases, closed loop control algorithms such as FOC become preferable due to their enhanced efficiency and stability. This necessitates a transition from open loop to closed loop control at a certain point during operation.

Traditionally, this transition has been performed instantaneously. The voltage angle and amplitude, along with current usage and open loop speed, are used to initialize the closed loop algorithm's initial state and Proportional-Integral-Derivative (PID) integrals. Even with perfect initialization, a significant error often occurs in the first iteration of the closed loop algorithm, triggering an immediate and usually aggressive response due to the proportional gain of the controller. This response can cause a torque shock and current spikes, which generate audible noise and increase the risk of motor stalling.

In prior art controllers, these disturbances during the transition can result in torque shocks, which are visible in the phase currents and produce audible noise. Additionally, these disturbances may cause oscillations within the motor controllers, leading to slower acceleration and an increased risk of stalling.

The risk of stalling is even greater when transitioning from closed loop back to open loop control. After the transition, the open loop controller may be unable to effectively address any instabilities introduced during the process.

There is therefore a need for methods and systems for controlling a BLDC motor which allow a smooth transition when increasing or decreasing the speed of the motor.

### Summary of the invention

It is an object of embodiments of the present invention to provide a good method and device for controlling a BLDC motor.

The above objective is accomplished by a method and device according to the present invention.

In a first aspect embodiments of the present invention relate to a device for controlling a BLDC motor, comprising a driving module configured to apply voltage to the motor to drive it; an observer module configured to obtain a closed loop IB angle between a measured current angle and a closed loop back electromotive force (BEMF) angle wherein the BEMF angle is obtained based on the applied voltage; an open loop angle module configured to obtain an open loop IB angle between the measured current angle and an open loop BEMF angle, wherein the open loop BEMF angle is calculated based on a desired open loop control profile; an angle transition module configured to calculate a weighted average IB angle based on the closed loop IB angle and the open loop IB angle; and an angle control module configured to determine a voltage angle to be applied to the motor based on the weighted average IB angle.

In embodiments of the present invention the desired open loop control profile may be an open loop speed curve which defines the desired speed in function of time. The invention is, however, not limited thereto. Also a desired angle or acceleration may be given in function of time. In embodiments of the present invention the desired angle may for example increase or decrease linearly, quadratically or in any desired way in function of time.

When transitioning from open loop to closed loop, the open loop IB angle is initialized based on the applied voltage and the measured current angle (I-angle).

When transitioning from closed loop to open loop, the closed loop IB angle is initialized based on the observer IB- and I-angle.

It is an advantage of embodiments of the present invention that a smooth transition between open loop and closed loop control modes is facilitated. This minimizes torque shocks, current spikes, and noise during transitions, improving overall motor performance.

It is an advantage of embodiments of the present invention that the ability to switch between open loop control at lower speeds and closed loop control at higher speeds enables more efficient motor operation across a wide range of operating conditions. This dual-mode control optimizes energy usage and enhances the motor's performance in various speed ranges.

It is an advantage of embodiments of the present invention that by blending the IB angles from both open loop and closed loop control systems in the angle transition module, the device reduces the risk of motor stalling, particularly during critical transitions. This ensures a more stable control process, avoiding sudden changes that could disrupt motor operation.

In embodiments of the present invention the device, furthermore, may comprise a current speed control module configured to control the motor speed by generating a closed loop target current amplitude based on a speed error; a current amplitude transition module configured to calculate a weighted average between the closed loop target current amplitude and an open loop target current amplitude to obtain a target peak current; and a current amplitude control module configured to generate a peak voltage to apply to the motor based on the target peak current and a measured current amplitude.

It is an advantage of embodiments of the present invention that speed control is enhanced through current regulation. This is particularly advantageous in systems where speed must be accurately maintained despite load variations. It is an advantage of embodiments of the present invention that a smooth transition between open loop and closed loop target current amplitudes is obtained.

In alternative embodiments of the present invention the device, furthermore, may comprise a voltage speed control module configured to control the motor speed by generating a closed loop target voltage amplitude based on a speed error; a voltage amplitude control module configured to generate an open loop voltage amplitude from an open loop current amplitude and from a measured current amplitude; a voltage amplitude transition module configured to calculate a weighted average between the open loop voltage amplitude and the target voltage amplitude generated by the voltage speed control module to obtain a peak voltage to apply to the motor.

It is an advantage of embodiments of the present invention that a smooth transition between open loop and closed loop voltage amplitudes is obtained.

In embodiments of the present invention the angle transition module is configured for calculating the weighted average IB angle using weighting factors and to dynamically adjust the weighting factors based on the motor speed.

It is an advantage of embodiments of the present invention that a smooth transition is enabled between open loop and closed loop control.

In embodiments of the present invention the angle transition module is configured for changing the weighting factors linearly such that the open loop IB angle gets a lower weight when transitioning from closed loop to open loop and gets a higher weight when transitioning from open loop to closed loop.

In embodiments of the present invention the angle transition module is configured for calculating the weights based on the motor speed or based on the signal-to-noise ratio of the measured back electromotive force.

In embodiments of the present invention the angle transition module is configured for initiating the transition from open loop to closed loop when the motor speed exceeds a first predefined speed threshold or when the signal-to-noise ratio of the measured back electromotive force exceeds a first predefined signal-to-noise ratio threshold and for initiating the transition from closed loop to open loop when the motor speed becomes smaller than a second predefined speed threshold or when the signal-to-noise ratio of the measured back electromotive force becomes smaller than a second predefined signal-to-noise ratio threshold.

In embodiments of the present invention the angle control module takes the open loop angle from the open loop angle module as voltage angle when reset by the angle transition module at the beginning of the transition from open loop to closed loop.

In embodiments of the present invention the current amplitude transition module is configured for calculating the target peak current using weighting factors and to dynamically adjust the weighting factors based on the motor speed.

In embodiments of the present invention the voltage amplitude transition module is configured for calculating the peak voltage using weighting factors and to dynamically adjust the weighting factors based on the motor speed.

In a second aspect embodiments of the present invention relate to a method for controlling a brushless direct current motor. The method comprises:
- driving the motor by applying a voltage to the motor;
- obtaining a closed loop IB angle, between a measured current angle and a closed loop BEMF angle which is based on the applied voltage;
- obtaining an open loop IB angle, between the measured current angle and an open loop BEMF angle, wherein the open loop BEMF angle is calculated based on a desired open loop control profile;
- calculating a weighted average IB angle based on the closed loop IB angle and the open loop IB angle;
- determining a voltage angle that must be applied to the motor based on the weighted average IB angle.

In embodiments of the present invention the method, furthermore, comprises
- generating a closed loop target current amplitude based on a speed error and obtaining an open loop target current amplitude;
- calculating a weighted average between the closed loop target current amplitude and the open loop target current amplitude to obtain a target peak current;
- generating a peak voltage to apply to the motor from the target peak current and from a measured current amplitude.

In embodiments of the present invention the method, furthermore, comprises:
- generating a closed loop target voltage amplitude based on a speed error;
- generating an open loop voltage amplitude from an open loop current amplitude and from a measured current amplitude;
- calculating a weighted average between the open loop voltage amplitude and the target voltage amplitude generated to obtain a peak voltage to apply to the motor.

In embodiments of the present invention the calculating of the weighted average IB angle comprises using weighting factors and dynamically adjusting the weighting factors based on the motor speed.

In embodiments of the present invention the calculating of the weighted average IB angle comprises changing the weighting factors linearly such that the open loop IB angle gets a lower weight when transitioning from closed loop to open loop and gets a higher weight when transitioning from open loop to closed loop.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a schematic drawing of a device for controlling a BLDC motor, together with current amplitude control, in accordance with embodiments of the present invention.
FIG. 2 shows a schematic drawing of a device for controlling a BLDC motor, with direct voltage amplitude control, in accordance with embodiments of the present invention.
FIG. 3 shows a detailed schematic drawing of an exemplary device for controlling a BLDC motor, together with current amplitude control, in accordance with embodiments of the present invention.
FIG. 4 shows a detailed schematic drawing of an exemplary device for controlling a BLDC motor, with direct voltage amplitude control, in accordance with embodiments of the present invention.
FIG. 5 shows a flow chart illustrating different possible methods in accordance with embodiments of the present invention.
FIG. 6 shows a phase current transition from open loop to closed loop, in accordance with embodiments of the present invention.
FIG. 7 shows a phase current transition from closed loop to open loop, in accordance with embodiments of the present invention.
FIG. 8 shows an oscilloscope screen picture of PWM signals and a phase current of an open to closed loop transition obtained when controlling a fan with non-sinusoidal BEMF, using a device or method in accordance with embodiments of the present invention.
FIG. 9 shows an oscilloscope screen picture of PWM signals and a current signal of a closed to open loop transition obtained when controlling a fan with non-sinusoidal BEMF, using a device or method in accordance with embodiments of the present invention.
FIG. 10 shows an oscilloscope screen picture of PWM signals and a current signal of an open to closed loop transition obtained when controlling a 3 phase gearboxed motor without load, using a device or method in accordance with embodiments of the present invention.
FIG. 11 shows an oscilloscope screen picture of PWM signals and a current signal of an open to closed loop transition obtained when controlling a 3 phase gearboxed motor with load, using a device or method in accordance with embodiments of the present invention.
FIG. 12 shows an oscilloscope screen picture of PWM signals and a current signal of a closed to open loop transition obtained when controlling a 3 phase gearboxed motor without load, using a device or method in accordance with embodiments of the present invention.
FIG. 13 an oscilloscope screen picture of shows PWM signals and a current signal of a closed to open loop transition obtained when controlling a 3 phase gearboxed motor with load, using a device or method in accordance with embodiments of the present invention.
FIG. 14 an oscilloscope screen picture of shows PWM signals and a current signal of an open to closed loop transition obtained when controlling a 4 phase bipolar stepper with gearbox, using a device or method in accordance with embodiments of the present invention.
FIG. 15 an oscilloscope screen picture of shows PWM signals and a current signal of a closed to open loop transition obtained when controlling a 4 phase bipolar stepper with gearbox, using a device or method in accordance with embodiments of the present invention.

Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to an open loop IB angle, reference is made to the angle between a measured current angle and the BEMF angle wherein the BEMF angle is calculated based on a desired open loop control profile such as an open loop speed curve. Also other open loop control profiles such as a desired angle or acceleration in function of time may be used.

Where in embodiments of the present invention reference is made to a closed loop IB angle, reference is made to the angle between the measured current angle and a closed loop BEMF angle wherein the closed loop BEMF angle is based on the applied voltage.

The present invention discloses a device and a method for smoothly driving a BLDC motor. At low speeds an open loop control is proposed and at high speeds (compared to the low speeds of the open loop control) a closed loop control is proposed. This disclosure describes a method to smoothly transition a BLDC motor between an open loop control and a closed loop control or vice versa. The closed loop control algorithm may for example be a FOC algorithm. It is thereby an advantage of embodiments of the present invention that during the transition current spikes are avoided resulting in a smooth transition with a good stability and without additional acoustics.

In a method or device, in accordance with embodiments of the present invention, both open and closed loop algorithms are running in parallel during the transition and a weighted average of the open loop IB-angle and closed loop IB-angle is taken. The transition from open loop to closed loop can start after a first predetermined speed threshold has been reached or the measurement noise has become small enough (e.g. high enough BEMF is obtained) and therefore a first predefined signal to noise ratio has been reached. The transition from closed loop to open loop can start when the motor speed becomes smaller than a second predetermined speed threshold or when the measurement noise becomes smaller than a second predefined signal to noise ratio has been reached.

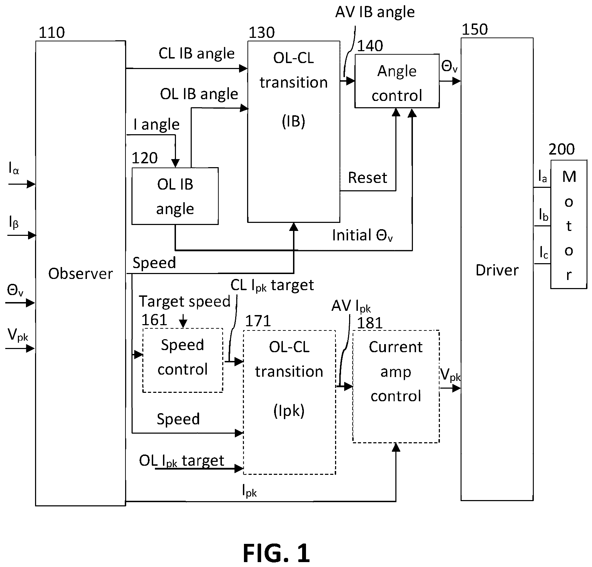

In a first aspect embodiments of the present invention relate to a device 100 for controlling a brushless direct current motor 200. Schematic drawings of such a device are shown in FIGs 1 to 4. The BLDC motor 200 is a multiphase motor comprising 2 or more phases, or 3 or more phases.

The device 100 comprises a driving module 150 configured to apply a voltage to the motor 200 to drive it.

The device, moreover, comprises an observer module 110 configured to obtain a closed loop IB angle between a measured current angle and a closed loop BEMF angle based on the applied voltage. In embodiments of the present invention the observer module is configured to obtain the closed loop IB angle between the measured current angle and the closed loop BEMF angle based on the applied voltage and the measured current.

The device, moreover, comprises an open loop angle module 120 configured to obtain an open loop IB angle between the measured current angle and an open loop BEMF angle. The open loop BEMF angle is calculated based on a desired open loop control profile.

The device, moreover, comprises an angle transition module 130 configured to calculate a weighted average IB angle based on the closed loop IB angle and the open loop IB angle.

The device, moreover, comprises an angle control module 140 configured to determine a voltage angle to be applied to the motor based on the weighted average IB angle.

Running both algorithms (the open loop and the closed loop) in parallel and taking the weighted average of their outputs, makes sure that no sudden transition effects are introduced, thus resulting in a way smoother transition as the ones in prior art.

In embodiments of the present invention the motor is controlled using IB-control, meaning that the closed loop angle between the current and BEMF vector is controlled (e.g. using a FOC controller). This has the advantage of requiring much less CPU calculation power compared to algorithms which use I_{d}/I_{q} control, since the observer is much simpler and no forward/inverse Park transformation is required.

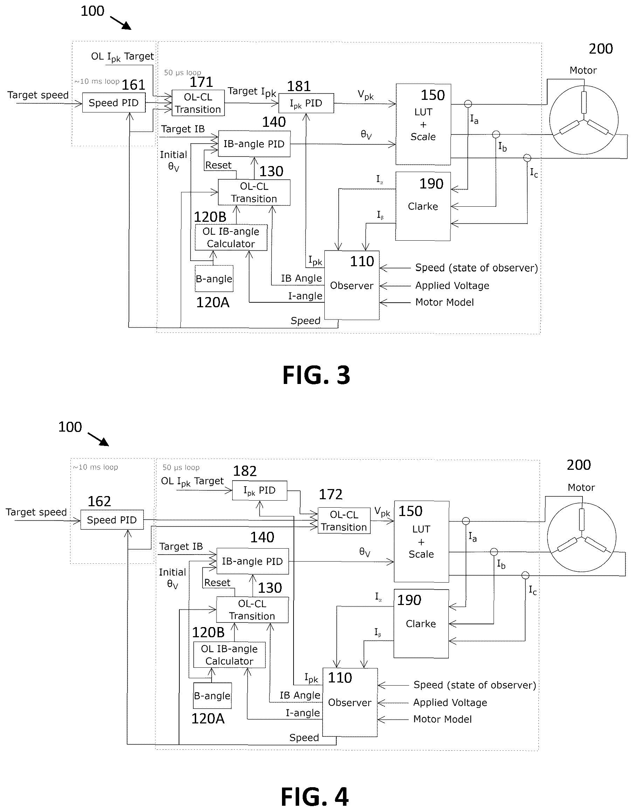

In embodiments of the present invention (of which examples are illustrated in FIG. 1 and FIG. 3) the control of the BLDC motor comprises current amplitude control. Therefore the device comprises a current speed control module 161 configured to control the motor speed by generating a closed loop target current amplitude based on a speed error.

In embodiments of the present invention the device comprises a current amplitude transition module 171 configured to calculate a weighted average between the closed loop target current amplitude and an open loop target current amplitude to obtain a target peak current.

In embodiments of the present invention the device comprises a current amplitude control module 181 configured to generate a peak voltage to apply to the motor from the target peak current and from a measured current amplitude.

The detailed block diagram of a controller in accordance with embodiments of the present invention illustrated in FIG. 3 comprises the following building blocks.

The driving module 150 is configured to apply a voltage to the motor 200. In this example the driving module comprises a lookup table (LUT). The voltage angle is used in the lookup table to receive its 3-phase equivalent. This equivalent is scaled based on the voltage amplitude value (also referred to as the voltage peak value). The resulting 3 voltages are applied (usually as a PWM signal on the motor phases). In this exemplary embodiment of the present invention the phase currents are measured while they are being applied (typically only 2 currents are measured and one is calculated).

In this exemplary embodiment of the present invention the device 100 comprises a Clarke transformation module 190 for applying a Clarke transformation on the obtained phase currents to convert a three phase system into a two-phase orthogonal coordinate system.

The device 100 also comprises an observer module 110 to calculate and/or estimate the current amplitude Iₚₖ, IB-angle, current angle and motor speed.

The device 100 also comprises a current speed control module 161 which controls the motor speed using the speed error between the target speed and the measured speed. The speed control module returns a target current amplitude. In this exemplary embodiment of the present invention the speed control module is a PID controller.

In this exemplary embodiment of the present invention the angle control module 140 is a PID controller. It controls the angle between the current and BEMF vector of the motor and returns the voltage angle Θᵥ that must be applied to the motor.

In this exemplary embodiment of the present invention the amplitude control module 181 is a PID controller. It controls the current amplitude of the motor and returns the voltage amplitude Vpk that must be applied to the motor based on the difference between the measured current amplitude Iₚₖ and the target current amplitude "target Iₚₖ".

In embodiments of the present invention the open loop angle module 120 comprises a B-angle module 120A and an open loop IB-angle calculator 120B.

The B-angle module 120A returns an open loop BEMF angle based on a desired open loop control profile (e.g. based on the open loop speed). It is possible for the open loop speed to remain constant, increase linearly or even increase quadratically depending on the application. In embodiments of the present invention this block is initialized in a way such that the initial IB-angle equals or is very close to zero (this results in no or a small jump in the voltage angle output).

The open loop IB-angle calculator 120B calculates the difference between the OL BEMF-angle and the observed I-angle.

The angle transition module 130 calculates the weighted average between the open loop IB-angle and the observed IB-angle to obtain the weighted average IB-angle. In embodiments of the present invention the weights change during the transition to obtain a smooth result. In embodiments of the present invention the transition is triggered by the observed speed exceeding a first predetermined speed threshold or when the observed data becomes reliable enough (when the measurement noise has become small enough, e.g. high enough BEMF is obtained).

In embodiments of the present invention the device 100 comprises a current amplitude transition module 171 which is configured for calculating, during the transition, a weighted average between the closed loop target current amplitude and an open loop target current amplitude to obtain a target peak current. In embodiments of the present invention the closed loop target current is obtained from the speed controller 161. In embodiments the weighting factors for the weighted average are dynamically adjusted based on the motor speed. In embodiments of the present invention the transition is triggered at the same time as the angle of the angle transition module.

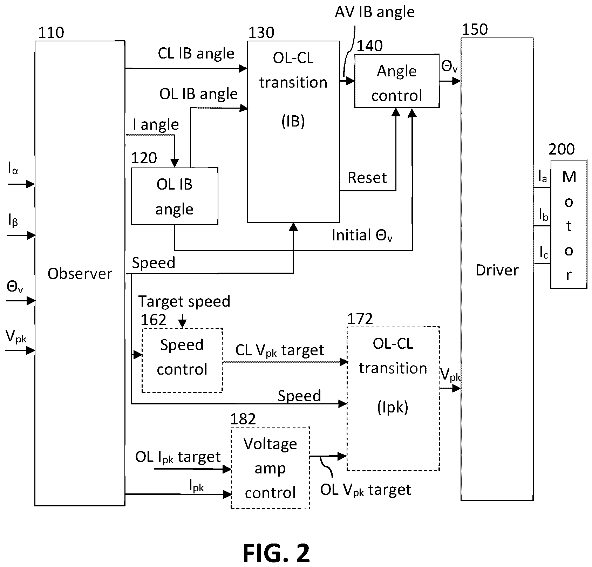

In embodiments of the present invention (of which examples are illustrated in FIG. 2 and FIG. 4) the control of the BLDC motor comprises direct voltage amplitude control (no Iₚₖ control). Therefore the device comprises a voltage speed control module 162 configured to control the motor speed by generating a closed loop target voltage amplitude based on a speed error.

In embodiments of the present invention the device comprises a voltage amplitude control module 182 configured to generate an open loop voltage amplitude from an open loop current amplitude and from a measured current amplitude.

In embodiments of the present invention the device comprises voltage amplitude transition module 172 configured to calculate a weighted average between the open loop voltage amplitude and the target voltage amplitude generated by the voltage speed control module 162 to obtain a peak voltage to apply to the motor.

Similarly as in FIG. 3 the detailed block diagram of the controller illustrated in FIG. 4 comprises a driving module 150, a Clarke transformation module 190, and an observer module 110. These modules may have the same functionality as in the modules FIG. 3.

The voltage speed control module 162 controls the motor speed using the speed error and returning the voltage amplitude that will be applied to the motor.

The angle control module 140 controls the angle between the current and BEMF vector of the motor and returns the voltage angle that must be applied to the motor.

The open loop angle module 120 comprises a B-angle module 120A and an open loop IB-angle calculator 120B.

The B-angle module 120A returns an open loop BEMF angle based on a desired open loop control profile (e.g. based on the open loop speed). It is possible for the open loop speed to remain constant, increase linearly or even increase quadratically depending on the application. In embodiments of the present invention this block is initialized in a way such that the initial IB-angle equals or is very close to zero (this results in no or a small jump in the voltage angle output).

The open loop IB-angle calculator 120B calculates the difference between the OL BEMF-angle and the observed I-angle.

The angle transition module 130 calculates the weighted average between the open loop IB-angle and the observed IB-angle to obtain the weighted average IB-angle. In embodiments of the present invention the weights change during the transition to obtain a smooth result. In embodiments of the present invention the transition is triggered by the observed speed exceeding a first predetermined speed threshold or when the observed data becomes reliable enough (when the measurement noise has become small enough, e.g. high enough BEMF is obtained).

In embodiments of the present invention the device comprises a voltage amplitude control module 182 configured to generate an open loop voltage amplitude from an open loop current amplitude and from a measured current amplitude. In this exemplary embodiment of the present invention the voltage amplitude control module is a PID controller. The voltage amplitude control module returns a voltage amplitude that needs to be applied for controlling the current.

In this exemplary embodiment of the present invention the device comprises a voltage amplitude transition module 172. This module provides an optional transition between the voltage amplitude obtained by the open loop algorithm and the voltage amplitude obtained by the speed controller. This transition can also be a weighted average of the two, with changing weights during the transition. In case there is a transition, it may be triggered at the same time as the IB OL-CL transition.

In embodiments of the present invention the open loop to closed loop transition may be implemented as follows. Before the transition starts, the angle control module 140 may be reset with the open loop angle as voltage angle, resulting in the angle control module having the same voltage angle output.

In embodiments of the present invention the device is also initialized with the open loop speed. When the closed loop control (e.g. a FOC algorithm) includes current control (e.g. speed control 161), the same current controller can remain active before, after and during the transition, or there can be a transition between the 2 different current controllers. When the closed loop control (e.g. FOC algorithm) doesn't include a current controller, there must be a transition between the voltage speed control module 162 and voltage amplitude transition module 172. This transition can either be instantaneous or it can be gradual like in the angle transition module 130.

In embodiments of the present invention the controller that will become active may be initialized based on the current voltage output, at the start of the transition.

The weighted average IB-angle used by the angle control module 140 (e.g. a PID controller) is a weighted average of the closed loop IB-angle calculated based on measurements and the open loop IB-angle which is calculated in an open loop way.

The closed loop IB-angle calculated based on measurements contains measurement noise, this noise is typically larger when the speed becomes smaller, that's why in embodiments of the present invention the motor is driven in open loop at lower speeds.

The open loop IB-angle is calculated by subtracting the open loop B-angle from the measured current angle. The open loop B-angle typically increases linearly based on the speed of the open loop control, but in different scenarios it might be more beneficial to increase this angle quadratically or to keep it constant.

At the start of the transition from open loop to closed loop, the open loop B-angle may be set equal to the applied voltage angle. Alternatively the initial open loop B-angle may be set such that the first IB-angle calculation is zero (open loop B-angle = observed I-angle). The result thereof is that there is no IB-error at the start of the transition. When the angle control module 140 is a PID controller and when there is no IB error at the start of the transition this implies that there is no immediate reaction by proportional part of controller.

In embodiments of the present invention the transition period can be time based. In such embodiments the angle transition module is configured such that the open loop IB-angle gets a linearly lower weight up until the transition period is passed and the open loop weight equals zero. In an alternative embodiment the weights may be calculated based on the amount of measurement noise or based on the current rotor speed. This may be advantageous in certain circumstances as it enables a more optimal choice of weights. For example if the motor runs with low load, and hence a low current and typically more measurement noise, or if the motor runs with high load, and hence a high current and typically less measurement noise, the choice of weights can be made more optimal when it is base on the measurement noise. This, however, may result in a less smooth transition.

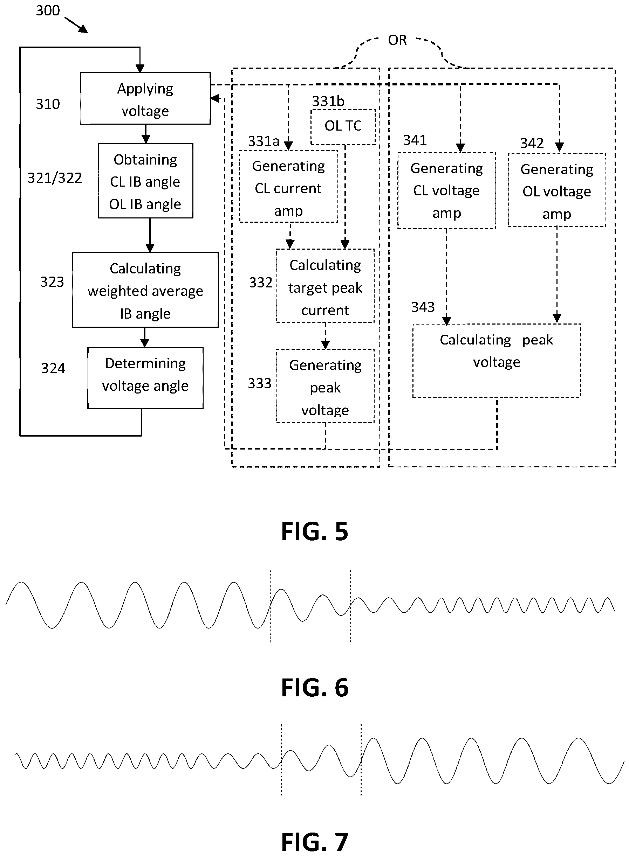

In a second aspect embodiments of the present invention relate to a method for controlling a BLDC motor. FIG. 5 illustrates an exemplary method 300 for controlling a brushless direct current (BLDC) motor 200, highlighting the main control process and optional components (in dashed lines). The process is structured as follows.

Driving the motor 310: the motor is driven by applying a voltage to the motor 200.

Obtaining 321 the closed loop IB Angle: the system measures the current angle and calculates a closed loop IB angle by comparing it to a closed loop BEMF angle, which is based on the applied voltage. In embodiments of the present invention the method comprises obtaining 321 a closed loop IB angle, between a measured current angle and a closed loop BEMF angle based on the applied voltage and the measured current.

Obtaining 322 the open loop IB angle: the system also comprises obtaining an open loop IB by calculating the angle between the measured current angle and an open loop BEMF angle, which is determined from the desired open loop control profile. This may be done simultaneously with obtaining the closed loop IB angle.

Calculating 323 the weighted average IB angle: a weighted average of the closed loop IB angle and the open loop IB angle is calculated to ensure a smooth transition between open and closed loop control.

Determining 324 a voltage angle 324: based on the weighted average IB angle, a voltage angle is determined and applied to the motor to drive its operation efficiently.

In embodiments of the present invention the method may optionally generate 331a a closed loop target current amplitude based on a speed error and obtain 331b an open loop target current amplitude, and calculate 332 a weighted average of these amplitudes, resulting in a target peak current. The method may, furthermore, generate 333 a peak voltage based on the target peak current and a measured current amplitude and apply the peak voltage to the motor.

Alternatively the method may generate 341 a closed loop target voltage amplitude based on a speed error and generate 342 an open loop voltage amplitude from an open loop current and from a measured current amplitude. These are used to calculate 343 a weighted average voltage amplitude that determines the peak voltage applied to the motor.

In embodiments of the present invention the weighting factors for the IB angle, current amplitude, or voltage amplitude are dynamically adjusted based on the motor speed or predefined conditions, ensuring smooth and efficient transitions between open and closed loop control.

This method enhances motor control performance, reducing the risk of disturbances like torque shocks and current spikes during transitions between control modes.

FIG. 6 shows the phase current in function of time of a BLDC motor which is controlled using a device or method in accordance with embodiments of the present invention. The left part of the graph shows the open loop phase current, the middle part shows the transition period, and the right part shows the closed loop control period which in this period is achieved by FOC.

In embodiments of the present invention the closed loop to open loop transition is implemented as the open loop to closed loop transition but in the opposite direction. The start of the transition may be triggered when the motor speed becomes smaller than a second predetermined speed threshold. The second predetermined speed threshold may be smaller than the first predetermined speed threshold. In other embodiments the start of the transition may be triggered when the current and/or BEMF amplitude become too small (too much measurement noise).

FIG. 7 shows the phase current in function of time of a BLDC motor which is controlled using a device or method in accordance with embodiments of the present invention wherein the transition is from closed loop to open loop control. The left part of the graph shows the closed loop phase current (controlled using FOC), the middle part shows the transition period, and the right part shows the open loop control period.

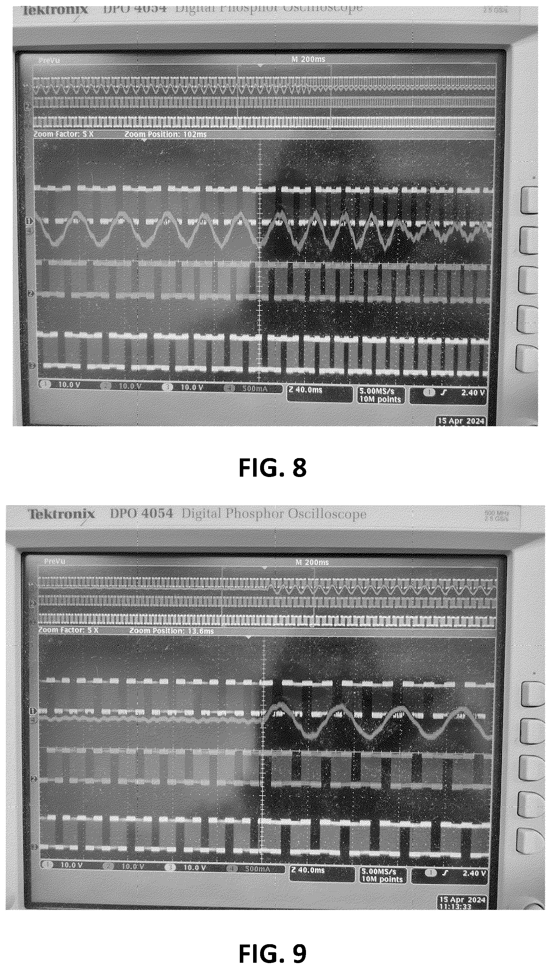

FIG. 8 to FIG. 15 show oscilloscope screen pictures of the PWM driving signals and of a phase current obtained when driving a BLDC motor using a device or method in accordance with embodiments of the present invention. For all these tests worst-case conditions are applied, ensuring that the actual transitions in practice will always be better, as demonstrated in the oscilloscope screen pictures. The following worst-case conditions have been set:
- The current amplitude transitions or the voltage amplitude transitions are always done instantly. In practice, on the other hand, a weighted average between the closed loop target current amplitude and an open loop target current amplitude may be calculated to obtain a target peak current or a weighted average between the open loop voltage amplitude and the target voltage amplitude may be calculated to obtain the peak voltage
- A motor with non-sinusoidal BEMF-shape and/or geared motor was used. This results in small inertia which, especially in combination with a gearbox, make any shock visible in the current shape.
- The second predefined signal-to-noise ratio threshold for the closed to open loop transition is set at a reduced signal to noise radio.

It is an advantage of embodiments of the present invention that, despite these conditions, a device or method in accordance with embodiments of the present invention can perform the transition without any speed variations or current spikes.

FIG. 8 shows an oscilloscope screen picture with plots of an open to closed loop transition of a fan with non-sinusoidal BEMF.

FIG. 9 shows an oscilloscope screen picture with plots of a closed to open loop transition of a fan with non-sinusoidal BEMF.

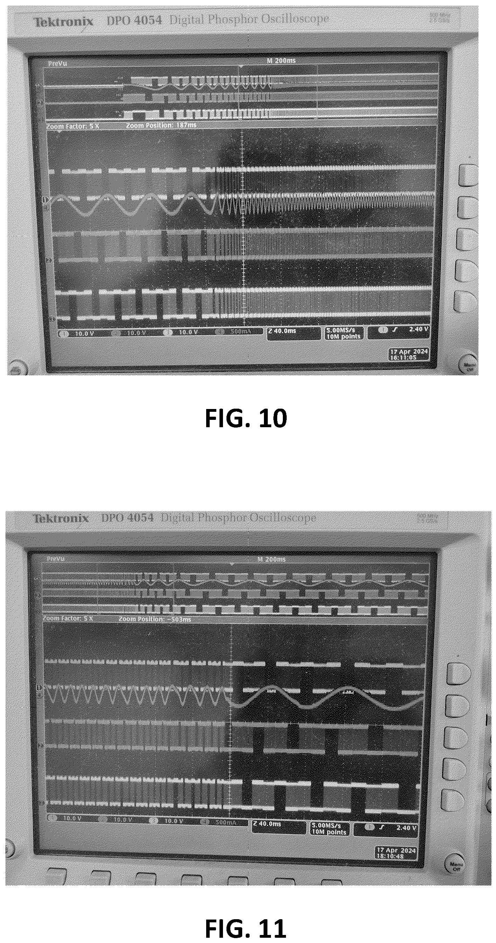

FIG. 10 shows an oscilloscope screen picture with plots of an open to closed loop transition of a 3 phase gearboxed motor without load.

FIG. 11 shows an oscilloscope screen picture with plots of an open to closed loop transition of a 3 phase gearboxed motor with load.

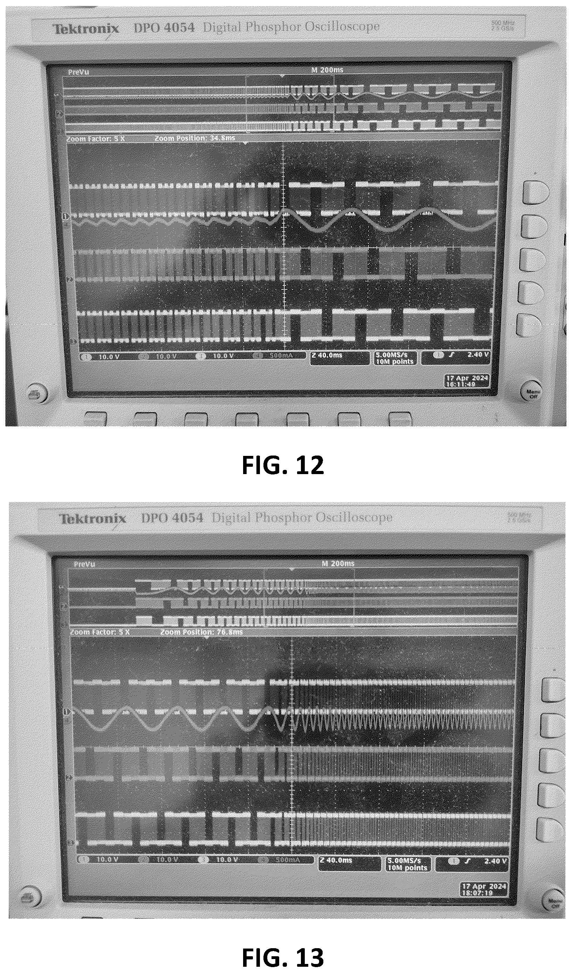

FIG. 12 shows an oscilloscope screen picture with plots of a closed to open loop transition of a 3 phase gearboxed motor without load.

FIG. 13 shows an oscilloscope screen picture with plots of a closed to open loop transition of a 3 phase gearboxed motor with load.

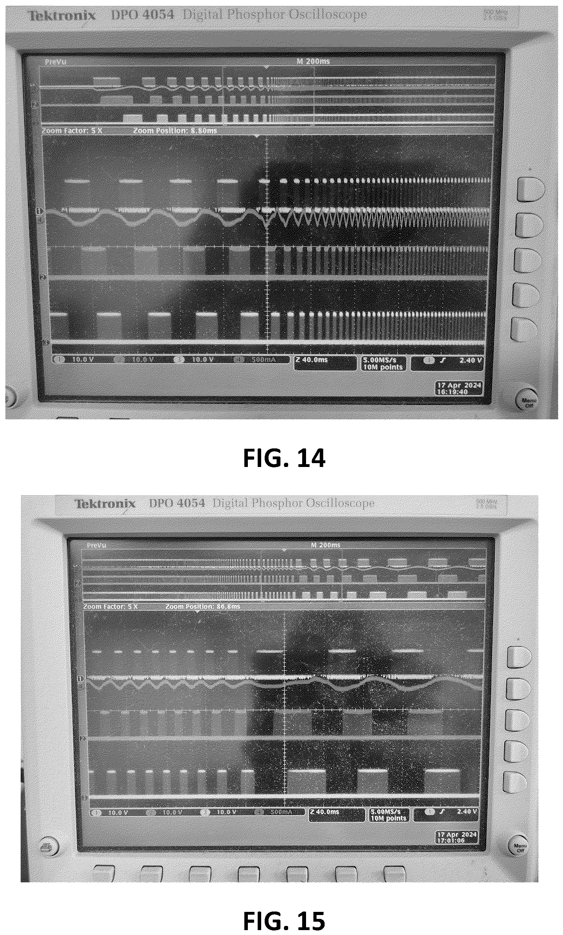

FIG. 14 shows an oscilloscope screen picture with plots of an open to closed loop transition of a 4 phase bipolar stepper motor with gearbox.

FIG. 15 shows an oscilloscope screen picture with plots of a closed to open loop transition of a 4 phase bipolar stepper motor with gearbox.

## Claims

1. A device (100) for controlling a brushless direct current motor (200), the device (100) comprising:
a driving module (150) configured to apply a voltage to the motor (200) to drive it;
an observer module (110) configured to obtain a closed loop IB angle, between a measured current angle and a closed loop BEMF angle based on the applied voltage;
an open loop angle module (120) configured to obtain an open loop IB angle, between the measured current angle and an open loop BEMF angle , wherein the open loop BEMF angle is calculated based on a desired open loop control profile;
an angle transition module (130) configured to calculate a weighted average IB angle based on the closed loop IB angle and the open loop IB angle;
an angle control module (140) configured to determine a voltage angle to be applied to the motor based on the weighted average IB angle.

2. The device (100) according to claim 1, further comprising:
- a current speed control module (161) configured to control the motor speed by generating a closed loop target current amplitude based on a speed error;
- a current amplitude transition module (171) configured to calculate a weighted average between the closed loop target current amplitude and an open loop target current amplitude to obtain a target peak current;
- a current amplitude control module (181) configured to generate a peak voltage to apply to the motor from the target peak current and from a measured current amplitude.

3. The device (100) according to claim 1, further comprising:
- a voltage speed control module (162) configured to control the motor speed by generating a closed loop target voltage amplitude based on a speed error;
- a voltage amplitude control module (182) configured to generate an open loop voltage amplitude from an open loop current amplitude and from a measured current amplitude;
- a voltage amplitude transition module (172) configured to calculate a weighted average between the open loop voltage amplitude and the target voltage amplitude generated by the voltage speed control module (162) to obtain a peak voltage to apply to the motor.

4. The device (100) according to any of the previous claims, wherein the angle transition module (130) is configured for calculating the weighted average IB angle using weighting factors and to dynamically adjust the weighting factors based on the motor speed.

5. The device (100) according to claim 4 wherein the angle transition module (130) is configured for changing the weighting factors linearly such that the open loop IB angle gets a lower weight when transitioning from closed loop to open loop and gets a higher weight when transitioning from open loop to closed loop.

6. The device (100) according to claim 4 wherein the angle transition module (130) is configured for calculating the weights based on the motor speed or based on the signal-to-noise ratio of the measured back electromotive force.

7. The device (100) according to any of the previous claims, wherein the angle transition module (130) is configured for initiating the transition from open loop to closed loop when the motor speed exceeds a first predefined speed threshold or when the signal-to-noise ratio of the measured back electromotive force exceeds a first predefined signal-to-noise ratio threshold and for initiating the transition from closed loop to open loop when the motor speed becomes smaller than a second predefined speed threshold or when the signal-to-noise ratio of the measured back electromotive force becomes smaller than a second predefined signal-to-noise ratio threshold.

8. The device (100) according to any of the previous claims, wherein the angle control module (140) takes the open loop angle from the open loop angle module (120) as voltage angle when reset by the angle transition module (130) at the beginning of the transition from open loop to closed loop.

9. The device (100) according to claim 2, wherein the current amplitude transition module (171) is configured for calculating the target peak current using weighting factors and to dynamically adjust the weighting factors based on the motor speed.

10. The device (100) according to claim 3, wherein the voltage amplitude transition module (172) is configured for calculating the peak voltage using weighting factors and to dynamically adjust the weighting factors based on the motor speed.

11. A method (300) for controlling a brushless direct current motor (200), comprising:
- driving (310) the motor by applying a voltage to the motor;
- obtaining (321) a closed loop IB angle, between a measured current angle and a closed loop BEMF angle based on the applied voltage;
- obtaining (322) an open loop IB angle, between the measured current angle and an open loop BEMF angle, wherein the open loop BEMF angle is calculated based on a desired open loop control profile;
- calculating (323) a weighted average IB angle based on the closed loop IB angle and the open loop IB angle;
- determining (324) a voltage angle that must be applied to the motor based on the weighted average IB angle.

12. The method (300) according to claim 11, furthermore comprising
- generating (331a) a closed loop target current amplitude based on a speed error and obtaining (331b) an open loop target current amplitude;
- calculating (332) a weighted average between the closed loop target current amplitude and the open loop target current amplitude to obtain a target peak current;
- generating (333) a peak voltage to apply to the motor from the target peak current and from a measured current amplitude.

13. The method (300) according to claim 11, furthermore comprising
- generating (341) a closed loop target voltage amplitude based on a speed error;
- generating (342) an open loop voltage amplitude from an open loop current amplitude and from a measured current amplitude;
- calculating (343) a weighted average between the open loop voltage amplitude and the target voltage amplitude generated to obtain a peak voltage to apply to the motor.

14. The method (300) according to any of the claims 11 to 13 wherein the calculating (323) of the weighted average IB angle comprises using weighting factors and dynamically adjusting the weighting factors based on the motor speed.

15. The method (300) according to claim 14 wherein the calculating (323) of the weighted average IB angle comprises changing the weighting factors linearly such that the open loop IB angle gets a lower weight when transitioning from closed loop to open loop and gets a higher weight when transitioning from open loop to closed loop.
